# EUROPEAN PATENT APPLICATION

(11) **EP 1 022 281 A1**
(43) Date of publication of application: **26.07.2000**
(21) Application number: 98945615.7
(22) Date of filing: 05.10.1998
(51) Int. Cl.: C07F 9/141, C07F 9/09, C07F 9/40, C10M 137/02, C10M 137/04, C10M 137/10, C10M 137/14

(54) **SULFUR-CONTAINING ORGANOPHOSPHORUS COMPOUNDS**

(30) Priority: 06.10.1997 JP 27261397
(71) Applicant: IDEMITSU KOSAN COMPANY LIMITED, Tokyo 100-0005 (JP)
(72) Inventor: KOSHIMA, Hiroaki, Sodegaura-shi, Chiba 299-0293 (JP); HATA, Hitoshi, Ichihara-shi, Chiba 299-0107 (JP); SONODA, Noboru, Ichihara-shi, Chiba 299-0107 (JP); TERADA, Izumi, Sodegaura-shi, Chib a 299-0293 (JP)
(74) Representative: Gille Hrabal Struck Neidlein Prop Roos
(86) International application number: JP9804490
(87) International publication number: WO9918112

(57) **Abstract**

The lubricating oil compositions that contain the sulfur-containing organophosphorus compound of the invention satisfy the requirements of extreme-pressure lubrication, wear resistance and frictional characteristics even under severe conditions of high loads such as those imposed on automatic or continuous variable transmissions and the like. Therefore, they have many applications in the field of lubricating oils.

## Description

### TECHNICAL FIELD

The present invention relates to novel sulfur-containing organophosphorus compounds and a method for producing them, to additives for lubricating oils that contain the sulfur-containing organophosphorus compound, and to lubricating oil compositions comprising the sulfur-containing organophosphorus compound.

### BACKGROUND OF THE INVENTION

In mechanical devices driving, some parts slide or roll on others being in contact with them whereby their metal surfaces are often worn. Lubricating oils are applied to them and are required to have the ability to prevent or reduce the surface wear. For the purpose of improving the anti-wear capabilities of lubricating oils and preventing their capabilities from being degraded so as to prolong the life of mechanical devices to which they are applied, additives to lubricating oils take an extremely important role. For example, base oil alone of lubricating oils could not enjoy many particular properties satisfying the requirements of transmission oil compositions and other lubricating oil compositions. Therefore, additives must be added to lubricating oils so as to improve the capabilities of the lubricating oil compositions. In that situation, various attempts have heretofore been made in the art for finding out novel additives for lubricating oils which have one or more properties suitable to use in lubricating oil compositions.

Known are phosphorus compounds and sulfur compounds as extreme-pressure agents. Some attempts have been made to produce novel compounds containing both phosphorus and sulfur atoms in one molecule and to use them as additives to lubricating oils. For example, US Patents 2,750,342, 2,960,523, 4,511,480, and Japanese Patent Laid-Open No. 3471/1997 disclose various phosphates, none of which, however, satisfies the requirements of extreme-pressure lubricity, wear resistance and frictional characteristics under severe conditions of high loads.

Taking the above into consideration, we, the present inventors have made the invention. The invention is to provide novel sulfur-containing organophosphorus compounds and a method for producing them, to provide additives for lubricating oils that contain the sulfur-containing organophosphorus compounds, and to provide lubricating oil compositions containing the additive and capable of satisfying the requirements of extreme-pressure lubricity, wear resistance and frictional characteristics even under severe conditions of high loads such as those imposed on automatic or continuously variable transmissions and the like.

### DISCLOSURE OF THE INVENTION

We, the present inventors have assiduously studied for the purpose of attaining the object as above, and, as a result, have found novel sulfur-containing organophosphorus compounds and have completed the invention.

Specifically, the first aspect of the invention is to provide at least one sulfur-containing organophosphorus compound selected from compounds of a general formula (I):

(R¹-S-R²-O) ₙ-P-(OH)₃₋ₙ (I)

wherein R¹ represents a hydrocarbon group having from 6 to 20 carbon atoms; R² represents a divalent hydrocarbon group having from 1 to 6 carbon atoms; and n indicates an integer of from 1 to 3,
and a general formula (II): 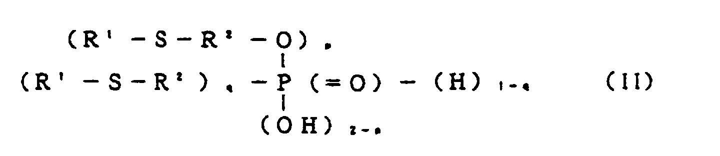 wherein R¹ and R² have the same meanings as above; p indicates an integer of from 0 to 2, and q indicates an integer of 0 or 1, with the proviso that p and q cannot be 0 at the same time.

The second aspect of the invention is to provide a method for producing the sulfur-containing organophosphorus compounds of the first aspect as above, which comprises reacting an alkylthioalkyl alcohol of a general formula (III):

R¹-S-R²-OH (III)

wherein R¹ and R² have the same meanings as above, with phosphorus trichloride in the absence of a catalyst or in the presence of a base.

The third aspect of the invention is to provide additives for lubricating oils, which contain at least one sulfur-containing organophosphorus compound selected from compounds of a general formula (IV):

[R¹-(X-R²)ₘ-Y]ₙ-P-(OH)₃₋ₙ (IV)

wherein R¹ and R² have the same meanings as above; X and Y each represent S (sulfur) or O (oxygen), and either one of X and Y is S; m indicates an integer of from 0 to 4 (provided that, when n = 3, m is an integer of from 1 to 4); and n has the same meaning as above,
and a general formula (V): 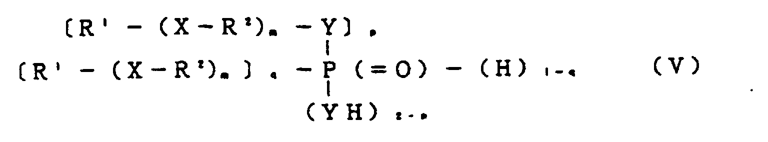 wherein in indicates an integer of from 0 to 4; and X, Y, R¹, R², p and q have the same meanings as above.

The fourth aspect of the invention is to provide lubricating oil compositions comprising an effective amount of the sulfur-containing organophosphorus compound as above.

### BRIEF DESCRIPTION OF THE DRAWINGS

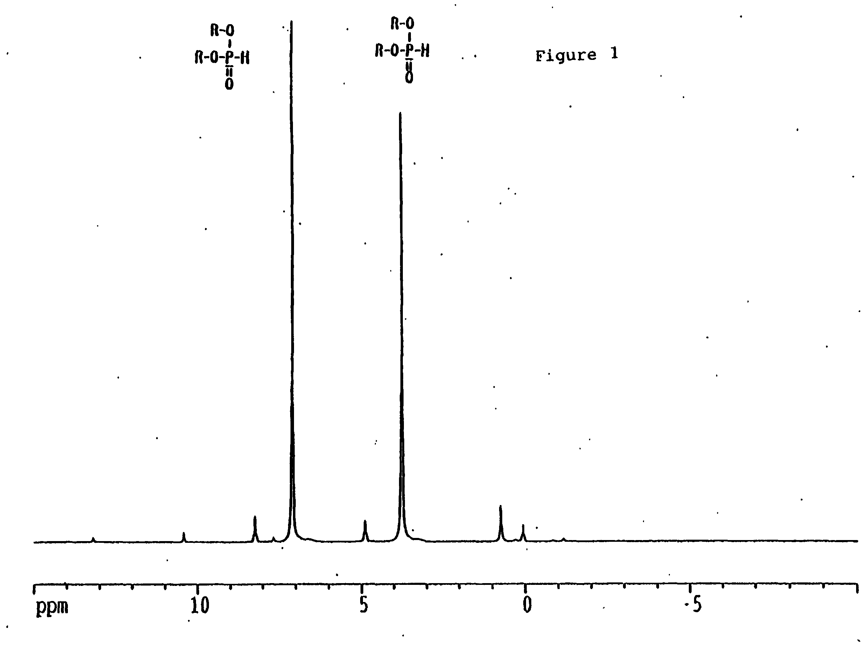

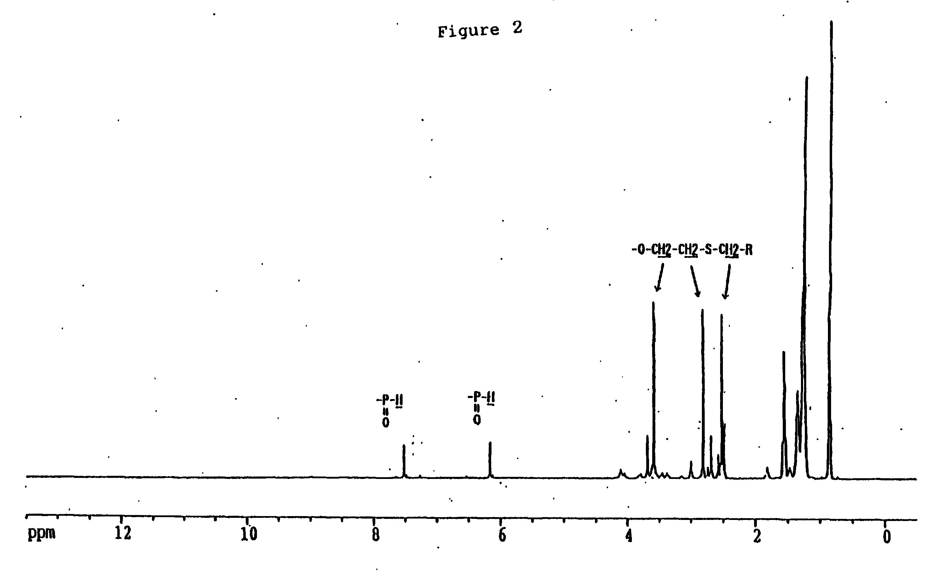

Fig. 1 is the spectral pattern of the reaction product of Production Example 1 of the invention, appearing in phosphorus nuclear magnetic resonance spectrometry of the product; and Fig. 2 is the spectral pattern of the reaction product of Production Example 1, appearing in proton nuclear magnetic resonance spectrometry of the product

### BEST MODES OF CARRYING OUT THE INVENTION

Best modes of carrying out the invention are described below.

The first aspect of the invention is to provide at least one sulfur-containing organophosphorus compound selected from compounds of formulae (I) and (II) noted above.

In formulae (I) and (II), R¹ represents a hydrocarbon group having from 6 to 20 carbon atoms, concretely including alkyl groups such as all types of hexyl groups, all types of heptyl groups, all types of octyl groups, all types of nonyl groups, all types of decyl groups, all types of undecyl groups, all types of dodecyl groups, all types of tridecyl groups, all types of tetradecyl groups, all types of pentadecyl groups, all types of hexadecyl groups, all types of heptadecyl groups, all types of octadecyl groups, all types of nonadecyl groups, all types of eicodecyl groups; cycloalkyl groups such as cyclohexyl group, all types of methylcyclohexyl groups, all types of ethylcyclohexyl groups, all types of propylcycloalkyl group, all types of dimethylcycloalkyl groups, etc.; aryl groups such as phenyl group, all types of methylphenyl groups, all types of ethylphenyl groups, all types of propylphenyl groups, all types of trimethylphenyl groups, all types of butylphenyl groups, all types of naphthyl groups, etc.; arylalkyl groups such as benzyl group, all types of phenylethyl groups, all types of methylbenzyl groups, all types of phenylpropyl groups, all types of phenylbutyl groups, etc. Of those, preferred are alkyl groups having from 8 to 16 carbon atoms.

In formulae (I) and (II), R² represents a divalent hydrocarbon group having from 1 to 6 carbon atoms, concretely including divalent aliphatic groups such as methylene group, ethylene group, 1,2-propylene group, 1,3-propylene group, all types of butylene groups, all types of pentylene groups, all types of hexylene groups; alicyclic groups with two bonding sites from alicyclic hydrocarbons such as cyclohexane, methylcyclopentane, etc.; all types of phenylene groups, etc. Of those, preferred are methylene group, ethylene group, and all types of propylene groups.

In formula (I), n indicates an integer of from 1 to 3, but is preferably 1 or 2.

In formula (II), p indicates an integer of from 0 to 2, and q indicates an integer of 0 or 1, with the proviso that p and q cannot be 0 at the same time. Preferably, p = 1 and q = 0; or p = 1 and q = 1; or p = 2 and q = 0.

Specific examples of the sulfur-containing organophosphorus compounds of formulae (I) and (II) include tri(octylthioethoxy) phosphite, tri(dodecylthioethoxy) phosphite, tri(hexadecylthioethoxy) phosphite, di(octylthioethoxy) phosphite, di(dodecylthioethoxy) phosphite, di(hexadecylthioethoxy) phosphite, mono(octylthioethoxy) phosphite, mono(dodecylthioethoxy) phosphite, mono(hexadecylthioethoxy) phosphite, octylthioethyl octylthioethylphosphonate, dodecylthioethyl dodecylthioethylphosphonate, hexadetylthioethyl hexadecylthioethylphosphonate, etc. These di- and monoesters include their tautomers.

The method for producing the sulfur-containing organophosphorus compounds of formulae (I) and (II) is not specifically defined. For example, the compounds may be produced by reacting an alkylthioalkyl alcohol of a general formula (III):

R¹-S-R²-OH (III)

wherein R¹ and R² have the same meanings as above, with phosphorus trichloride in the absence of a catalyst or in the presence of a base.

Regarding the ratio by mol of the reactants in the method, the amount of the alkylthioalkyl alcohol to be reacted with phosphorus trichloride may fall generally between 0.1 and 5.0 mols, preferably between 1.0 and 3.0 mols, more preferably between 1.5 and 2.5 mols, relative to one mol of phosphorus trichloride.

The reaction temperature may fall generally between -10 and 100°C, preferably between 0 and 40°C. The base serving as the catalyst includes, for example, triethylamine, pyridine, etc. The reaction may be effected in a solvent such as THF, diethyl ether or the like.

The third aspect of the invention is to provide additives for lubricating oils, which contain at least one sulfur-containing organophosphorus compound selected from compounds of a general formula (IV):

[R¹-(X-R²)ₘ-Y]ₙ-P-(OH)₃₋ₙ (IV)

wherein R¹ and R² have the same meanings as above; X and Y each represent S (sulfur) or O (oxygen), and either one of X and Y is S; m indicates an integer of from 0 to 4 (provided that, when n = 3, m is an integer of from 1 to 4); and n has the same meaning as above,
and a general formula (V): 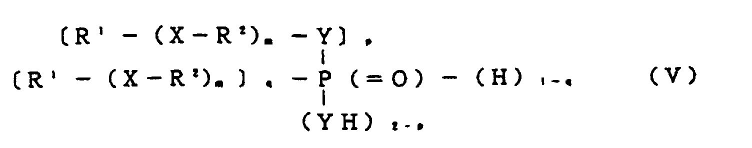 wherein m indicates an integer of from 0 to 4; and X, Y, R¹, R², p and q have the same meanings as above.

In formulae (IV) and (V), R¹, R², n, p and q are the same as those in the first aspect of the invention. In formulae (IV) and (V), m is preferably an integer falling between 1 and 4.

More preferably, the third aspect of the, invention provides additives for lubricating oils, which contain at least one sulfur-containing organophosphorus compound selected from compounds of a general formula (VI):

(R¹-S-R²-Y)ₙ-P-(OH)₃₋ₙ (VI)

wherein R¹, R², Y and n have the same meanings as above, and a general formula (VII): 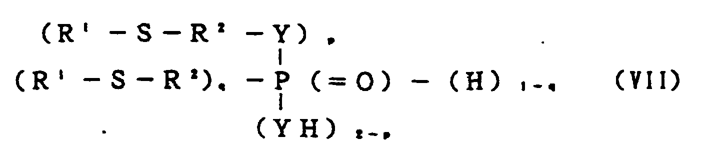 wherein R¹, R², Y, p and q have the same meanings as above.

Even more preferably, the additives for lubricating oils contain at least one sulfur-containing organophosphorus compound selected from compounds of the following general formulae (VIII), (IX), (X), (XI) and (XII):

R¹-S-R²-O-2-(OH)₂ (VIII)

(R¹-S-R²-O)₂-P-OH (IX)

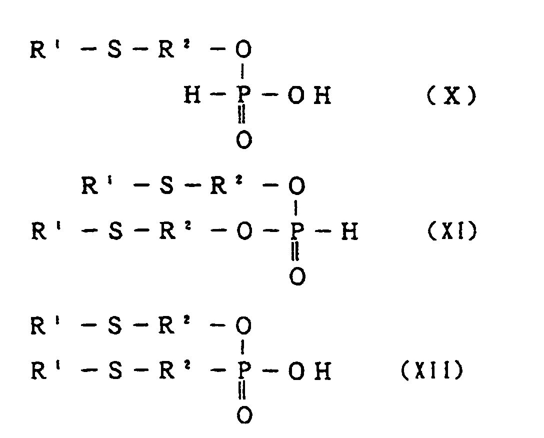

wherein R¹ and R² have the same meanings as above.

Where the sulfur-containing organophosphorus compounds are used as additives to lubricating oils, (1) they are used as they are, or (2) they are diluted with base oil of lubricating oils, before added to lubricating oils, or (3) they are combined with other additives, which will be mentioned hereinunder, into packages for use in lubricating oils. Therefore, the content of the sulfur-containing organophosphorus compound to be in the additives for lubricating oils may fall generally between 0.1 and 100 % by weight.

The lubricating oils to which the additives of the third aspect of the invention are added are not specifically defined, including, for example, transmission oils for automatic or continuous variable transmissions, gear oils, engine oils for internal-combustion engines, bearing oils, shock absorber oils, cutting fluids, forming lubricants, rolling oils and other various lubricating oils for industrial use.

The fourth aspect of the invention is to provide lubricating oil compositions comprising base oil and an effective amount of at least one sulfur-containing organophosphorus compound as above.

As the base oil, usable is any of mineral oils and synthetic oils. Known are various mineral oils and synthetic oils, from which may be selected appropriate ones for use in the invention, depending on their applications. For example, mineral oils include paraffinic mineral oils, naphthenic mineral oils, and mineral, intermediate base crude oils. As their specific examples, mentioned are solvent-purified or hydrogenated, light neutral oils, medium-gravity neutral oils, heavy neutral oils, bright stocks, etc.

Synthetic oils include, for example, poly-α-olefins, α-olefin copolymers, polybutenes, alkylbenzenes, polyolesters, esters of dibasic acids, esters of polyalcohols, polyoxyalkylene glycols, esters of polyoxyalkylene glycols, polyalkylene glycol ethers, cycloalkane compounds, etc.

These base oils can be used either singly or as combined. As the case may be, mineral oils and synthetic oils can be combined for use in the invention.

The effective amount of the sulfur-containing organophosphorus compound to be in the lubricating oil compositions varies, depending on the use of the compositions, but may fall generally between 0.01 and 10 % by weight, preferably between 0.1 and 5 % by weight of the composition.

In addition to the additive noted above, the lubricating oil compositions of the invention may optionally contain any additional additives which have heretofore been used in ordinary lubricating oil compositions, such as detergent dispersants, antioxidants, rust inhibitors, defoaming agents, viscosity index improvers, pour point depressants, demulsifying agents, other extreme-pressure lubrication improvers, other anti-wear additives, etc., so far as the additional additives do not detract from the object of the invention.

The lubricating oil compositions of the invention can be used, for example, as lubricating oils for power transmissions, lubricating oils for internal-combustion engines, gear oils, bearing oils, shock absorber oils, and lubricating oils for industrial machines.

The invention is described in more detail with reference to the following Examples, which, however, are not intended to restrict the scope of the invention.

### [Production Example 1]

38.1 g (0.2 mols) of n-octylthioethanol, 20.2 g (0.2 mols) of triethylamine and 250 ml of THF were put into a 500 ml flask and stirred to give a uniform liquid. With cooling the liquid with ice, 13.7 g (0.1 mols) of phosphorus trichloride was dropwise added thereto in a nitrogen atmosphere, and stirred at room temperature for 1 hour. The side product, triethylamine hydrochloride was removed through filtration. 1.8 g (0.1 mols) of water was dropwise added to the reaction mixture, and stirred at room temperature for one full day. Then, THF was evaporated away under reduced pressure, using an evaporator. The yield of the thus-obtained reaction product was 42 g.

By its phosphorus nuclear magnetic resonance spectrometry (Fig. 1) and proton nuclear magnetic resonance spectrometry (Fig. 2), the reaction product was identified as the compound of the following formula (XIII):

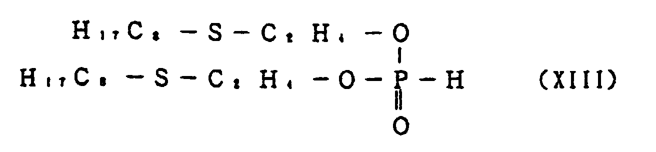

### [Production Example 2]

13.7 g (0.1 mols) of phosphorus trichloride and 50 ml of THF were put into a 500 ml flask and stirred to give a uniform liquid. With cooling the liquid with ice, a mixture of 38.1 g (0.2 mols) of n-octylthioethanol, 20.2 g (0.2 mols) of triethylamine and 250 ml of THF was dropwise added thereto in a nitrogen atmosphere, and stirred at room temperature for 1 hour. The side product, triethylamine hydrochloride was removed through filtration. 1.8 g (0.1 mols) of water was dropwise added to the reaction mixture, and stirred at room temperature for one full day. Then, THF was evaporated away under reduced pressure, using an evaporator. The yield of the thus-obtained reaction product was 41 g.

By its phosphorus nuclear magnetic resonance spectrometry and proton nuclear magnetic resonance spectrometry, the reaction product was identified as the compound of above formula (XIII).

### [Production Example 3]

The same process as in Production Example 2 was repeated, except that 38.6 g (0.2 mols) of n-dodecylthioethanol was used in place of octylthioethanol. The yield of the reaction product obtained herein was 51 g.

By its phosphorus nuclear magnetic resonance spectrometry and proton nuclear magnetic resonance spectrometry, the reaction product was identified as the compound of the following formula (XIV).

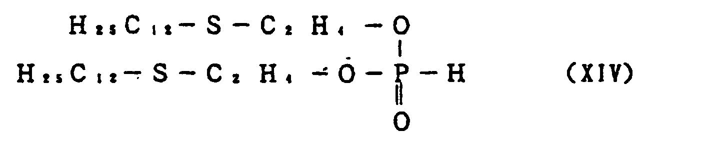

### [Production Example 4]

The same process as in Production Example 2 was repeated, except that 60.5 g (0.2 mols) of n-hexadecylthioethanol was used in place of n-octylthioethanol. The yield of the reaction product obtained herein was 65 g. By its phosphorus nuclear magnetic resonance spectrometry and proton nuclear magnetic resonance spectrometry, the reaction product was identified as the compound of the following formula (XV).

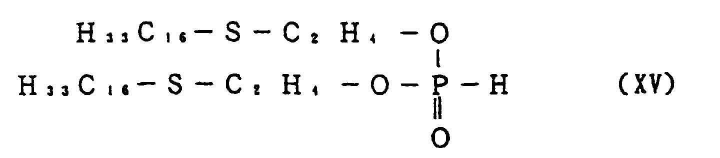

### [Production Example 5]

The same process as in Production Example 2 was repeated, except that the amount of n-octylthioethanol to be used was varied to 28.5 g (0.15 mols) and that of water was to 2.7 g (0.15 mols). The yield of the reaction product obtained herein was 33 g.

By its phosphorus nuclear magnetic resonance spectrometry and proton nuclear magnetic resonance spectrometry, the reaction product was identified as a mixture of compounds of the following formula (XVI) and the above formula (XIII).

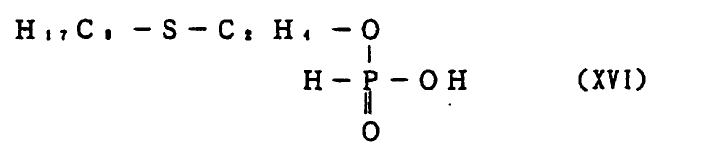

The mixture was subjected to liquid chromatography (through a reversed-phase column with a solvent of acetonitrile, equipped with a differential refractiometer serving as a detector). The data confirmed that the mixture was comprised of 44 % by weight of the compound of formula (XVI) and 56 % by weight of the compound of formula (XIII).

### [Production Example 6]

The same process as in Production Example 2 was repeated, except that the amount of n-octylthioethanol to be used was varied to 47.6 g (0.25 mols), that of triethylamine was to 25.3 g (0.25 mols) and that of water was to 0.9 g (0.05 mols). The yield of the reaction product obtained herein was 52 g.

By its phosphorus nuclear magnetic resonance spectrometry and proton nuclear magnetic resonance spectrometry, the reaction product was identified as a mixture of compounds of the following formula (XVII) and the above formula (XIII).

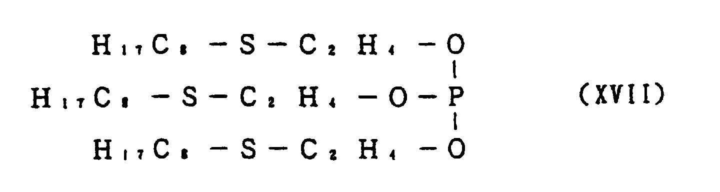

The mixture was subjected to liquid chromatography (through a reversed-phase column with a solvent of acetonitrile, equipped with a differential refractiometer serving as a detector). The data confirmed that the mixture was comprised of 51 % by weight of the compound of formula (XVII) and 49 % by weight of the compound of formula (XIII).

### [Production Example 7]

13.7 g (0.1 mols) of phosphorus trichloride and 100 ml of diethyl ether were put into a 500 ml flask, and stirred to give a uniform liquid. With cooling the liquid with ice, a solution in diethyl ether of 27.7 g (0.1 mols) of n-octylthioethylmagnesium bromide was dropwise added thereto in a nitrogen atmosphere, and stirred at a temperature not higher than 10°C for 1 hour. Then, this was further stirred at room temperature for 1 hour. The reaction mixture was poured into an aqueous 5 % hydrochloric acid solution cooled with ice, to stop the reaction. This was extracted with diethyl ether, and the resulting extract was dried with anhydrous magnesium sulfate. Then, diethyl ether was evaporated away, and 21 g (yield: 75 %) of n-octylthioethyldichlorophosphine was obtained.

13.7g (0.05 mols of the thus-obtained n-octylthioethyldichlorophosphine and 50 ml of THF were put into a 500 ml flask, and stirred to give a uniform liquid. With cooling the liquid with ice, a mixture of 9.5 g (0.05 mols) of n-octylthioethanol, 5.1 g (0.05 mols) of triethylamine and 100 ml of THF was dropwise added thereto in a nitrogen atmosphere, and stirred at room temperature for 1 hour. The side product, triethylamine hydrochloride was removed through filtration. 0.9 g (0.05 mols) of water was dropwise added to the reaction mixture, and stirred at room temperature for one full day. Then, THF was evaporated away under reduced pressure, using an evaporator. The yield of the thus-obtained reaction product was 20 g.

By its phosphorus nuclear magnetic resonance spectrometry and proton nuclear magnetic resonance spectrometry, the reaction product was identified as the compound of the following formula (XVIII):

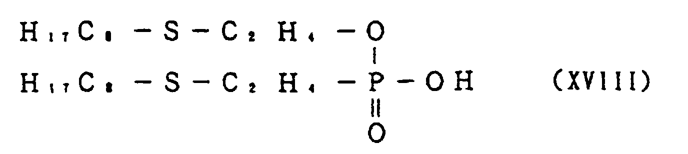

### [Production Example 8]

The same process as in Production Example 1 was repeated, except that 21.2 g (0.2 mols) of ethylthioethanol was used in place of n-octylthioethanol. The yield of the reaction product obtained herein was 33 g.

By its phosphorus nuclear magnetic resonance spectrometry and proton nuclear magnetic resonance spectrometry, the reaction product was identified as the compound of the following formula (XIX).

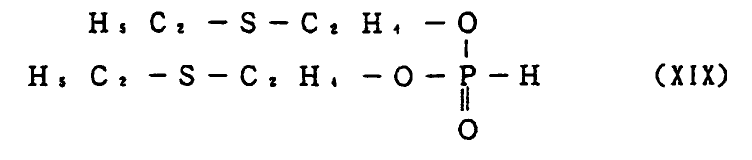

### [Production Example 9]

The same process as in Production Example 1 was repeated, except that 15.3 g (0.1 mols) of phosphorus oxychloride was used in place of phosphorus trichloride. The yield of the reaction product obtained herein was 44 g.

By its phosphorus nuclear magnetic resonance spectrometry and proton nuclear magnetic resonance spectrometry, the reaction product was identified as the compound of the following formula (XX).

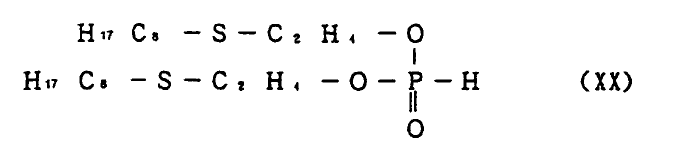

### [Examples 1 to 7, Comparative Examples 1 to 4, and Reference Example 1]

To a cycloalkane-type, synthetic base oil, added were 1 % by weight (based on the total weight of the resulting composition - the same shall apply hereunder) of the sulfur-containing organophosphorus compound prepared in any of Production Examples mentioned above, or a commercial product, phosphite or thiophosphite, 1 % by weight of a detergent dispersant, 0.5 % by weight of an antioxidant, 0.1 % by weight of a rust inhibitor, and 0.1 % by weight of a defoaming agent to prepare different lubricating oil compositions. The compositions were subjected to a Falex block on ring test (frictional wear test, according to ASTM D-3704) under the conditions mentioned below, to evaluate their properties. The data obtained are in Table 1. Apart from those, prepared was another lubricating oil composition containing none of the sulfur-containing organophosphorus compounds of the invention and the commercial products of phosphite and thiophosphite, as Reference Example 1. This was also subjected to the same test.

### Conditions for Frictional wear Test

Ring: made of SAE 4620 steel.
Block: made of SAE 01 steel.
Temperature: 130°C.
Rotation Speed: 0.367 m/sec.
Load: 1500 N.
Time: 60 minutes.
Matters checked: appearance of ring, degree of ring wear, width of block wear, degree of block wear, change in coefficient of friction.

**Table 1-1**

| | Additive | Frictional Wear Test Data | | |
|---|---|---|---|---|
| | | Appearance of Ring*1 | Degree of Ring Wear (mg) | Width of Block Wear (mm) |
| Example 1 | Production Example 1 | ○ | 0.2 | 0.743 |
| Example 2 | Production Example 2 | ○ | 0.1 | 0.686 |
| Example 3 | Production Example 3 | ○ | 0.1 | 0.669 |
| Example 4 | Production Example 4 | ○ | 0.1 | 0.706 |
| Example 5 | Production Example 5 | ○ | 0.0 | 0.654 |
| Example 6 | Production Example 6 | ○ | 0.2 | 0.735 |
| Example 7 | Production Example 7 | ○ | 0.1 | 0.725 |
| Comparative Example 1 | Production Example 8 | △ | 0.5 | 0.934 |
| Comparative Example 2 | Substance A*2 | △ | 0.3 | 0.846 |
| Comparative Example 3 | Substance B*3 | X | 4.4 | 0.872 |
| Comparative Example 4 | Production Example 9 | X | 4.7 | 1.037 |
| Reference Example 1 | - | X | 3.9 | 1.016 |

| | | | | |
|---|---|---|---|---|
| *1: ○ indicates that the ring surface was smooth. △ indicates that the ring surface changed gray. X indicates that the ring surface changed black. | | | | |
| *2: Di(dodecyl) phosphite. | | | | |
| *3: Tridodecyl trithiophosphite. | | | | |

**Table 1-2**

| | Frictional Wear Test Data | |
|---|---|---|
| | Degree of Block Wear (mg) | Change in Coefficient of Friction*4 |
| Example 1 | 0.1 | ○ |
| Example 2 | 0.0 | ○ |
| Example 3 | 0.0 | ○ |
| Example 4 | 0.0 | ○ |
| Example 5 | 0.0 | ○ |
| Example 6 | 0.1 | ○ |
| Example 7 | 0.0 | ○ |
| Comparative Example 1 | 0.1 | X |
| Comparative Example 2 | 0.1 | X |
| Comparative Example 3 | 0.2 | X |
| Comparative Example 4 | 0.2 | X |
| Reference Example 1 | 0.3 | X |

| | | |
|---|---|---|
| *4: ○ indicates that the change was smaller than 0.01. X indicates that the change was 0.01 or above. | | |

From the data in Table 1, it is understood that the lubricating oil compositions containing any of the sulfur-containing organophosphorus compounds of the invention are all good in that they have no negative influence on the ring in the test, that they wear little the ring and the block, that the width of the block tested with them is reduced little, and that their coefficient of friction changes little.

It is also understood therefrom that the lubricating oil compositions containing any of the compounds of Production Examples 8 and 9 (though their structures are similar to the structures of the sulfur-containing organophosphorus compounds of the invention) and the commercial products, phosphite and thiophosphite are all inferior to the compositions of the invention with respect to all the matters checked in the test.

### INDUSTRIAL APPLICABILITY

The lubricating oil compositions that contain the sulfur-containing organophosphorus compound of the invention satisfy the requirements of extreme-pressure lubrication, wear resistance and frictional characteristics even under severe conditions of high loads such as those imposed on automatic or continuous variable transmissions and the like. Therefore, they have many applications in the field of lubricating oils.

## Claims

1. At least one sulfur-containing organophosphorus compound selected from compounds of a general formula (I):
(R¹-S-R²-O)ₙ-P-(OH)₃₋ₙ (I)
wherein R¹ represents a hydrocarbon group having from 6 to 20 carbon atoms; R² represents a divalent hydrocarbon group having from 1 to 6 carbon atoms; and n indicates an integer of from 1 to 3,
and a general formula (II): 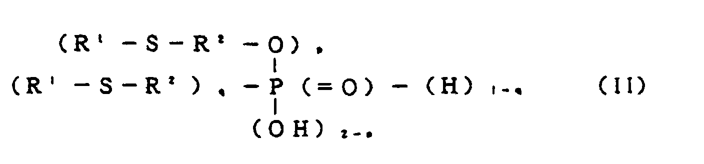 wherein R¹ and R² have the same meanings as above; p indicates an integer of from 0 to 2, and q indicates an integer of 0 or 1, with the proviso that p and q cannot be 0 at the same time.

2. At least one sulfur-containing organophosphorus compound selected from compounds of formulae (I) and (II) wherein n = 1, those wherein n = 2, those wherein p = 1 and q = 0, those wherein p = 1 and q = 1, and those wherein p = 2 and q = 0.

3. A method for producing sulfur-containing organophosphorus compounds of claim 1 or 2, which comprises reacting an alkylthioalkyl alcohol of a general formula (III):
R¹-S-R²-OH (III)
wherein R¹ and R² have the same meanings as above, with phosphorus trichloride in the absence of a catalyst or in the presence of a base.

4. Additives for lubricating oils, which contain at least one sulfur-containing organophosphorus compound selected from compounds of a general formula (IV):
[R¹-(X-R²)ₘ-Y]ₙ-P-(OH)₃₋ₙ (IV)
wherein R¹ and R² have the same meanings as above; X and Y each represent S (sulfur) or O (oxygen), and either one of X and Y is S; m indicates an integer of from 0 to 4 (provided that, when n = 3, m is an integer of from 1 to 4); and n has the same meaning as above,
and a general formula (V): 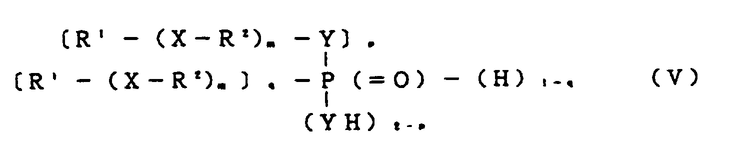 wherein m indicates an integer of from 0 to 4; and X, Y, R¹, R², p and q have the same meanings as above.

5. Additives for lubricating oils, which contain at least one sulfur-containing organophosphorus compound selected from compounds of a general formula (VI):
(R¹-S-R²-Y)ₙ-P-(OH)₃₋ₙ (VI)
wherein R¹, R², Y and n have the same meanings as above, and a general formula (VII): 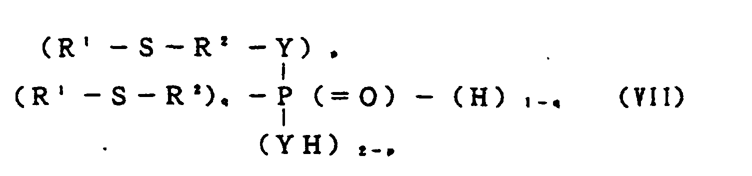 wherein R¹, R², Y, p and q have the same meanings as above.

6. Additives for lubricating oils, which contain at least one sulfur-containing organophosphorus compound selected from compounds of the following general formulae (VIII), (IX), (X), (XI) and (XII):
R¹-S-R²-O-P-(OH)₂ (VIII)
(R¹-S-R²-O)₂-P-OH (IX) 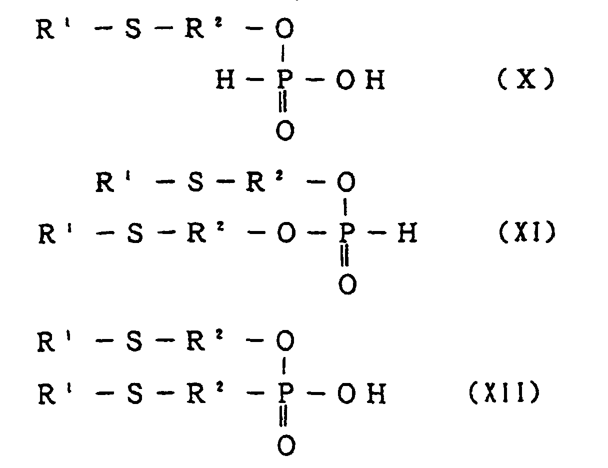
wherein R¹ and R² have the same meanings as above.

7. Lubricating oil compositions comprising base oil and an effective amount of the sulfur-containing organophosphorus compound of any one of claims 4 to 6.
